# EUROPÄISCHE PATENTSCHRIFT

(11) **EP 3 047 952 B1**
(45) Veröffentlichungstag und Bekanntmachung des Hinweises auf die Patenterteilung: **16.09.2020**
(21) Anmeldenummer: 15197502.6
(22) Anmeldetag: 02.12.2015
(51) Int. Cl.: B29C 45/14

(54) **GIESSVORRICHTUNG ZUR HERSTELLUNG EINER VERBINDUNG ZWISCHEN EINEM AUS EINER VIELZAHL EINZELNER KABEL BESTEHENDEN KABELBAUM MIT EINEM DIESEN INTEGRIERENDEN HALTEELEMENT**
CASTING DEVICE FOR THE PRODUCTION OF A CONNECTION BETWEEN A CABLE TREE COMPRISING HAVING A PLURALITY OF SEPARATE CABLES WITH A RETAINING ELEMENT INTEGRATING SAME
DISPOSITIF DE COULEE DESTINE A FABRIQUER UNE LIAISON ENTRE UN FAISCEAU DE CABLES COMPRENANT UNE PLURALITE DE CABLES INDIVIDUELS ET UN ELEMENT DE RETENUE L'INTEGRANT

(30) Priorität: 10.12.2014 DE 202014105948 U
(43) Veröffentlichungstag der Anmeldung: 27.07.2016
(73) Patentinhaber: Josef Weischer GmbH & Co. KG, 48282 Emsdetten (DE)
(72) Erfinder: HUNE, Rupert, 49090 Osnabrück (DE); TEEPE, Uwe, 49134 Wallenhorst (DE)
(74) Vertreter: Bossmeyer, Jörg Peter

(56) Entgegenhaltungen:
- DE-A1- 1 479 203
- DE-A1- 2 845 200
- DE-T2- 69 827 178
- DE-U1-202007 016 674
- DE-U1-202009 012 903
- US-A- 4 236 689

## Beschreibung

Die Erfindung betrifft eine Gießvorrichtung zur Herstellung einer Verbindung zwischen einem aus einer Vielzahl einzelner Kabel bestehenden Kabelbaum mit einem diesen integrierenden Halteelement. Ferner betrifft die Erfindung ein Verfahren zur Ausstattung eines aus einer Vielzahl einzelner Kabel bestehenden Kabelbaumes mit einem diesen integrierenden Halteelement.

Aus dem Bereich der Schäumwerkzeuge sind bereits Dichtungen bekannt, die durch Erhöhung des Innendruckes in der Lage sind, ihr Volumen zu vergrößern und sich damit einer abzudichtenden Oberfläche optimal anzupassen. Derartige Dichtungen werden bislang jedoch nur für diesen speziellen Einsatzfall verwendet.
Aus der DE 698 27 178 T2 geht beispielsweise eine in einem Schäumwerkzeug verwendbare Konturdichtung hervor, die ein Schlauchelement aufweist, dessen Wandung elastisch verformbar ist. Durch Erhöhung des in dem Schlauchelement herrschenden Innendruckes wird das Schlauchelement in seinem Volumen vergrößert. Geht man vom normalen Luftdruck aus, so bedeutet dabei die erwähnte Erhöhung des Innendruckes eine Anhebung des Betrages dieses Druckes über den normalen Luftdruck. Ein die Dichtung bildender Teil der Konturdichtung der DE 698 27 178 T2 besteht aus einem massiven Körper aus elastischem Werkstoff. Dieser Teil der Konturdichtung ist in einer Führungsnut des Schäumwerkzeuges aufgenommen und somit wie ein Kolben innerhalb der Führungsnut bewegbar. Durch die massive Ausführung des kolbenartigen Abschnittes der Konturdichtung wird keine optimale Abdichtung erreicht, da eine Anpassung an Oberflächen mit wechselnden Geometrien, wie sie beispielsweise bei einem Kabelbaum vorliegt, nicht möglich ist.

Eine andere, ebenfalls in einem Schäumwerkzeug verwendbare Konturdichtung, die ein Schlauchelement und einen Dichtungsabschnitt aus elastischem Werkstoff aufweist, wobei die Wandung des Schlauchelementes durch Veränderung des in dem Schlauchelement herrschenden Innendruckes elastisch verformbar und damit aufweitbar ist, geht darüber hinaus aus der DE 20 2009 012 903 U1 hervor. Der mit dem Schlauchelement korrespondierende Dichtungsabschnitt ist dabei auf seiner dem Schlauchelement zugewandten Seite zusätzlich mit einer Lippe ausgestattet, die bei diesem Beispiel in eine passende Ausnehmung eines Schäumwerkzeuges eingesetzt ist, was insgesamt eine verhältnismäßig aufwendige Ausführung darstellt.

Eine gattungsbildende und aus einem Unterwerkzeug und einem Oberwerkzeug bestehende Gießvorrichtung mit einer darin zum Einsatz kommenden Konturdichtung zur Abdichtung eines Kabelbaumes ist beispielsweise aus der DE 20 2007 016 674 U1 bekannt. Die in dieser Druckschrift offenbarte Konturdichtung besteht aus einem Schlauchelement, das über ein Ventil mit Druckluft versorgt werden kann, so dass das Schlauchelement durch Erhöhung des Innendruckes in seinem Volumen vergrößert wird und sich dadurch an den abzudichtenden Kabelbaum anlegt. Durch diese Maßnahme kann der in einer Kavität der Gießvorrichtung aufgenommene Kabelbaum mit einem Halteelement umspritzt beziehungsweise umgossen werden. Nachteilig ist bei dieser Ausführung jedoch, dass das Schlauchelement selbst zur Abdichtung des Kabelbaumes verwendet wird. Dies hat nämlich zur Folge, dass das Schlauchelement einem verstärkten Verschleiß unterliegt, der beispielsweise aus der thermischen Belastung in unmittelbarer Nähe des Gießvorganges herrührt. Aufgrund dieses Umstandes muss das hier zum Einsatz kommende Schlauchelement verhältnismäßig oft durch ein neues ersetzt werden, was nicht nur einen unverhältnismäßig hohen Aufwand, sondern auch hohe Herstellungskosten mit sich bringt.

Die besondere Problematik der Ausstattung eines Kabelbaumes mit einem Halteelement besteht darin, dass der aus mehreren einzelnen Kabeln bestehende Kabelbaum eine nicht definierbare Außengeometrie aufweist. Zudem sollten in der Gießvorrichtung auch Kabelbäume mit unterschiedlichen Querschnitten verarbeitet werden können, da aus Kostengründen nicht für jede Kabelbaumausführung eine eigene Gießvorrichtung hergestellt werden kann. Insofern muss die Gießvorrichtung möglichst flexibel einsetzbar und die verwendete Abdichtung des Kabelbaumes möglichst verschleißarm sein.

Der Erfindung liegt daher die Aufgabe zugrunde, eine Gießvorrichtung zur Herstellung einer Verbindung zwischen einem aus einer Vielzahl einzelner Kabel bestehenden Kabelbaum mit einem diesen integrierenden Halteelement bereitzustellen, die einfach aufgebaut ist und eine flexibel an wechselnde Geometrien der zu verarbeitenden Kabelbäume anpassbare, verschleißarme Dichtung aufweist. Ferner soll ein einfaches Verfahren zur Ausstattung eines aus einer Vielzahl einzelner Kabel bestehenden Kabelbaumes mit einem diesen integrierenden Halteelement geschaffen werden.

Die Erfindung löst diese Aufgabenstellung mit einer Gießvorrichtung nach Anspruch 1 und mit einem Verfahren nach Anspruch 7. Weitere Ausgestaltungen der Erfindung sind in der nachfolgenden Beschreibung und in den Unteransprüchen gegeben.

Die erfindungsgemäße Gießvorrichtung zur Herstellung einer Verbindung zwischen einem aus einer Vielzahl einzelner Kabel bestehenden Kabelbaum mit einem diesen integrierenden Halteelement umfasst ein Unterwerkzeug, ein das Unterwerkzeug verschließendes Oberwerkzeug, mindestens eine, bei geschlossener Gießvorrichtung zwischen Oberwerkzeug und Unterwerkzeug gebildete, den Kabelbaum aufnehmende Kavität mit der Negativform des zu erzeugenden Halteelementes und wenigstens ein hydraulisch oder pneumatisch in seinem Volumen vergrößerbares Schlauchelement, das mit einem separaten, zumindest abschnittsweise bewegbar in einer Aufnahmekontur der Gießvorrichtung eingesetzten und den Kabelbaum bei expandiertem Schlauchelement gegenüber der Umgebung abdichtenden, zumindest lokal in der Aufnahmekontur befestigten Dichtelement gekoppelt ist, und das mindestens an seiner den Kabelbaum aufnehmenden Innenkontur weichelastisch ausgeführt ist.

Der in die Kavität eingelegte Kabelbaum ragt zumindest einseitig aus dieser Kavität heraus. Der Regelfall besteht jedoch darin, dass der Kabelbaum die Kavität vollständig durchdringt und damit auf zwei Seiten aus der Kavität austritt. In dem jeweiligen Austrittsbereich ist eine Abdichtung der Kavität gegenüber der Umgebung erforderlich, um die Herstellung des Halteelementes zu ermöglichen, ohne dass der Gusswerkstoff aus der Gießvorrichtung austritt. Die Abdichtung des Kabelbaumes gegenüber der Umgebung ist erfindungsgemäß zweiteilig ausgeführt und besteht aus einem Schlauchelement, das durch eine geeignete Druckbeaufschlagung in seinem Volumen vergrößert werden kann und das unmittelbar an einem verformbaren Dichtelement zur Anlage kommt, das zumindest im Bereich des abzudichtenden Kabelbaumes weichelastisch ausgeführt ist. "Weichelastisch" bedeutet im Sinne der Erfindung, dass es sich bei diesem Bereich um einen Elastomerwerkstoff handelt, der eine Shore-Härte "A" oder "B" nach DIN EN ISO 868 beziehungsweise DIN ISO 7619-1 aufweist. Der besondere Vorteil einer derartigen Lösung besteht darin, dass das Schlauchelement nicht mehr, wie es bisher der Fall war, innerhalb kurzer Zeit verschleißt und daher ausgetauscht werden muss. Durch die Zweiteilung der Abdichtung ist ein widerstandsfähigeres Dichtelement zwischen Schlauchelement und Kabelbaum angeordnet, dass vergleichsweise langlebig ist und im Bedarfsfall einfacher ausgetauscht werden kann, als das innerhalb der Gießvorrichtung verlegte Schlauchelement. Ein weiterer, sehr wesentlicher Vorzug der Erfindung besteht darin, dass die gesamte Gießvorrichtung und insbesondere der Bereich der Abdichtung des Kabelbaumes sehr einfach ausgeführt werden kann. Die im Rahmen der Erfindung vorgestellte Art der Abdichtung ermöglicht in flexibler Weise Kabelbäume unterschiedlicher Querschnitte zu verarbeiten, ohne dass aufwändige Umbaumaßnahmen an der Gießvorrichtung erforderlich werden.

Entsprechend einer ersten Ausgestaltung der Erfindung wird vorgeschlagen, dass das Dichtelement insgesamt aus einem weichelastischen Werkstoff besteht. Diese Maßnahme trägt zu einer weiteren Vereinfachung der Ausführung des Dichtelementes bei, da dieses nicht in unterschiedliche Abschnitte unterteilt werden muss, sondern einstückig und in einem Arbeitsgang aus einem weichelastischen Werkstoff hergestellt werden kann.

Da die Gießvorrichtung nach der Erfindung aus einem Oberwerkzeug und einem Unterwerkzeug besteht, die dichtend miteinander verbunden sind, wenn die Gießvorrichtung geschlossen ist, besteht das Dichtelement vorzugsweise ebenfalls aus zwei Teilen, wobei eine der Hälften des Dichtelements in dem Oberwerkzeug und die korrespondierende, zweite Hälfte des Dichtelements in dem Unterwerkzeug aufgenommen ist. Bei geschlossener Gießvorrichtung liegen die beiden Teile des Dichtelementes unmittelbar aneinander an, wozu sie in diesem Bereich plane oder komplementäre Oberflächengeometrien aufweisen. Die zweiteilige Ausführung erleichtert auch die Einführung des Kabelbaumes in das Dichtelement. Dieser kann nämlich einfach in die Gießvorrichtung eingelegt werden, bevor diese verschlossen wird. Bei einer einteiligen Ausführung des Dichtelementes müsste der Kabelbaum zunächst durch die Öffnung des Dichtelementes hindurchgeführt werden.

Bevorzugt wird das Dichtelement vollständig von einem Schlauchelement umschlossen, um eine zuverlässige Abdichtung entlang des gesamten Umfanges des Kabelbaumes zu gewährleisten. Folglich wird bei einer zweiteiligen Ausführung des Dichtelementes auch jeder Hälfte des Dichtelements je ein Schlauchelement zugeordnet. Dabei können die einzelnen Schlauchelemente gemeinsam aus einer hydraulischen oder pneumatischen Quelle zur Druckerzeugung gespeist werden oder jeweils separat mit je einer Druckerzeugungseinrichtung verbunden sein.

Da das Dichtelement zumindest abschnittsweise bewegbar ausgeführt ist, wird erfindungsgemäß vorgeschlagen, das Dichtelement über mindestens eine Fixierungseinrichtung lokal in der Aufnahmekontur der Gießvorrichtung zu befestigen. So kann das Dichtelement beispielsweise an einer oder mehreren Seiten in der Aufnahmekontur der Gießvorrichtung fixiert werden. Maßgeblich ist jedoch, dass das Dichtelement im Bereich des abzudichtenden Kabelbaumes beweglich bleibt, so dass das mit dem Dichtelement gekoppelte Schlauchelement zumindest diesen Abschnitt gegen den Kabelbaum pressen kann, wenn es mit einem Druck beaufschlagt und in seinem Volumen vergrößert wird.

Als Fixierungseinrichtung zur Befestigung des Dichtelementes in der Aufhahmekontur können hierbei verschiedene Ausführungen zum Einsatz kommen. Eine erfindungsgemäße und sehr einfache Lösung ist darin zu sehen, dass die Fixierungseinrichtung aus zwei Stiften besteht, die passend in korrespondierende Bohrungen eingesetzt sind. Dabei ist es unerheblich, ob die Stifte in der Aufnahmekontur oder am Dichtelement vorgesehen sind. Beide Lösungsvarianten liegen im Bereich der Erfindung.

Eine andere Möglichkeit der Ausführung der Fixierungseinrichtung besteht darin, dass diese aus mindestens einer Schraube besteht, die in ein passendes Gewinde eingeschraubt ist. In diesem Fall ist es aus fertigungstechnischen Gründen sinnvoll, das Dichtelement mit Hilfe der Schraube in der Aufnahmekontur der Gießvorrichtung zu fixieren, so dass die Schraube das Dichtelement durchdringt und in ein Gewinde der Aufnahmekontur eingeschraubt wird.

Dem Erfordernis das Dichtelement zumindest abschnittsweise aus einem weichelastischen Werkstoff herzustellen, kann optimal entsprochen werden, wenn dieser Abschnitt oder das gesamte Dichtelement aus Silikon besteht. Silikon hat dabei gleich mehrere, sehr wesentliche Vorteile. So verfügt dieser Werkstoff über Gleiteigenschaften, was dazu führt, dass er sich optimal an den abzudichtenden Kabelbaum anschmiegt und sich nach dem Gießvorgang problemlos vom Kabelbaum ablöst. Silikon hat nämlich nicht die Eigenschaft, an dem abzudichtenden Gegenstand anzuhaften. Diese Selbsttrenneigenschaft des Silikons wird im Sinne der Erfindung genutzt. Ein weiterer Vorteil des Silikons besteht darin, dass dieses beständig gegen Trennmittel ist, die vorliegend zum Einsatz kommen können.

Das Halteelement, mit dem der Kabelbaum in der Gießvorrichtung ausgestattet wird, ist in bevorzugter Weise aus Naturkautschuk, Polyurethan (PUR) oder Ethylenpropylendienkautschuk (EPDM) hergestellt. Mit diesen Werkstoffen wurden bislang optimale Ergebnisse erzielt, wobei andere Werkstoffe nicht ausgeschlossen sind.

Ein mit der Erfindung durchzuführendes Verfahren zur Ausstattung eines aus einer Vielzahl einzelner Kabel bestehenden Kabelbaumes mit einem diesen integrierenden Halteelement, ist durch folgende Verfahrensschritte gekennzeichnet:
- Einlage des Kabelbaumes in eine passende Kavität einer ein Oberwerkzeug und ein Unterwerkzeug aufweisenden Gießvorrichtung,
- Verschließen der Gießvorrichtung,
- Beaufschlagung eines Schlauchelementes der Gießvorrichtung mit einem hydraulisch oder pneumatisch erzeugten Druck, sodass das auf diese Weise in seinem Volumen erweiterte Schlauchelement mit einem mit dem

Schlauchelement zusammenwirkenden Dichtelement dichtend an dem Kabelbaum anliegt und den Kabelbaum gegenüber der Umgebung abdichtet,
- Einbringung des oder eines Gießwerkstoffes in die Gießvorrichtung,
- Druckentlastung des Schlauchelementes, sodass das Dichtelement den mit dem Halteelement ausgestatteten Kabelbaum zur Entnahme aus der geöffneten Gießvorrichtung freigibt.

Das Verfahren ist mit wenigen Schritten umsetzbar und dadurch fertigungstechnisch sehr einfach gehalten. Es kann folglich sowohl für Kleinserien, als auch für die Großserienproduktion zum Einsatz kommen, da auch die verwendete kommende Gießvorrichtung flexibel an die Bedürfnisse der Herstellung angepasst werden kann.

Dabei wird der Gießwerkstoff bevorzugt unter Druck in die Gießvorrichtung eingespritzt. Folglich kann nicht nur ein Gießverfahren umgesetzt werden, sondern auch ein Spritzverfahren oder ein Spritzgussverfahren. Auch darin zeigt sich die besondere Flexibilität der erfindungsgemäßen Lösung.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung.

Gleiche oder gleichartige Bauteile werden stets mit denselben Bezugszeichen bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise einen Blick auf ein Unterwerkzeug einer geöffneten Gießvorrichtung,
- Figur 2:: einen Schnitt durch das Unterwerkzeug einer Gießvorrichtung im Bereich der Dichtung,
- Figur 3:: den Schnittverlauf III-III aus Figur 2
und
- Figur 4:: die der Figur 2 entsprechende Darstellung des Unterwerkzeugs einer erfindungsgemäßen Gießvorrichtung, jedoch ohne Dichtelement.

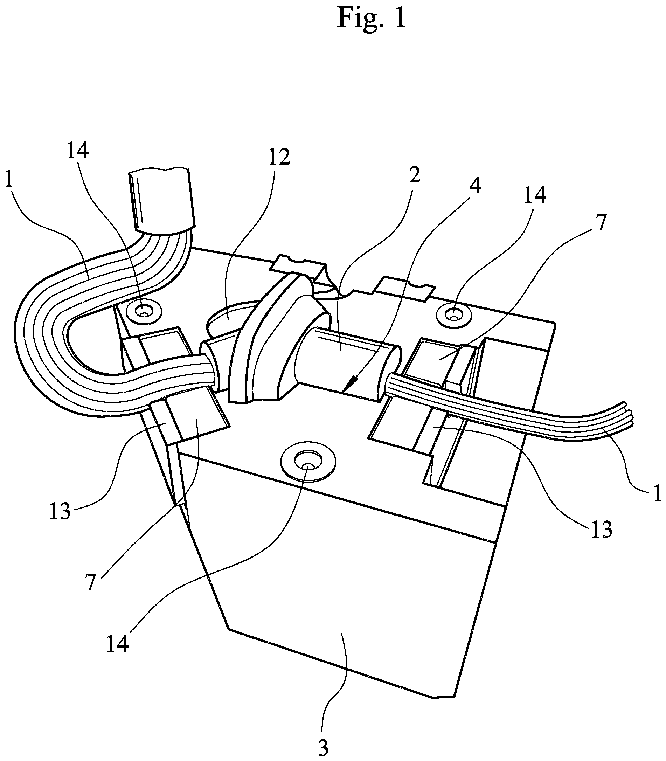

Bei dem in der Figur 1 gezeigten Teil einer Gießvorrichtung handelt es sich um ein Unterwerkzeug 3, das aus Vereinfachungsgründen ohne ein mit diesem gekoppeltes Oberwerkzeug dargestellt ist. Das Unterwerkzeug 3 verfügt über eine Kavität 4, deren Geometrie der Negativform des an einem Kabelbaum 1 anzubringenden Halteelementes 2 entspricht. Das Halteelement 2 wird in der Gießvorrichtung an den Kabelbaum 1 angespritzt und besteht im vorliegenden Fall aus einem Polyurethan-Werkstoff. Nach Fertigstellung des auf diese Weise hergestellten Kabelbaumes 1 kann das Halteelement 2 beispielsweise in die Frontwand eines Kraftfahrzeuges eingeknöpft werden und dient damit sowohl der Lagerung des Kabelbaumes 1, als auch der Abdichtung des Innenraumes des Kraftfahrzeugs gegenüber dem Motorraum. Zur Durchführung des Spritzgussverfahrens ist in das in Figur 1 dargestellte Unterwerkzeug 3 ein Angusskanal 12 eingeformt, der dazu dient, den flüssigen Polyurethan-Werkstoff in die Kavität 4 zu transportieren, wo er aushärtet und damit das Halteelement 2 bildet. Darüber hinaus verfügt das Unterwerkzeug 3 über mehrere Justierbohrungen 14, in die korrespondierende Justiernocken des Oberwerkzeuges eingreifen, wenn die Gießvorrichtung geschlossen wird. Auf diese Weise kann sichergestellt werden, dass das Oberwerkzeug maßgenau auf dem Unterwerkzeug 3 aufliegt. Es erfolgt eine Abdichtung des Kabelbaumes 1 gegenüber der Umgebung, während der Spritzgussvorgang innerhalb der Gießvorrichtung durchgeführt wird. Hierzu dient auf jeder Austrittsseite des Kabelbaumes 1 je ein Dichtelement 7, dessen Aufbau nachfolgend noch näher erläutert wird. Zur Fixierung des Dichtelementes 7 kommt darüber hinaus an jedem der vorhandenen Dichtelemente 7 je ein Absperrschieber 13 zum Einsatz. Auf diese Weise ist die gesamte Abdichtung lösbar in der Gießvorrichtung befestigt. Dies hat den Vorteil, dass gegebenenfalls verschlissene Elemente problemlos ausgetauscht werden können.

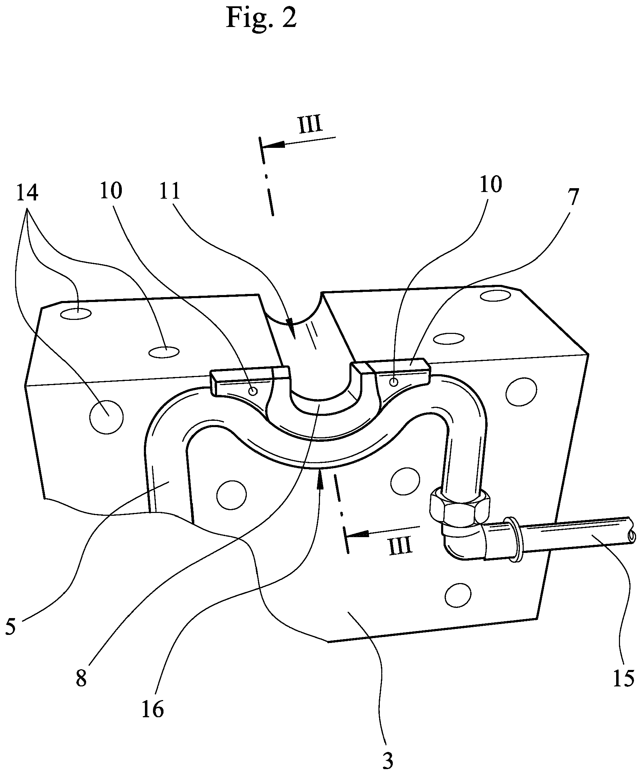

Aus der Figur 2 geht ein Schnitt durch das Unterwerkzeug 3 einer Gießvorrichtung im Bereich der Dichtung hervor. Hieraus wird deutlich, dass die gesamte Dichtung aus einem Schlauchelement 5 besteht, das vorliegend mit einem Druckluftanschluss 15 gekoppelt ist. Das Schlauchelement 5 verfügt bei dem in Figur 2 gezeigten Beispiel über eine etwa M-förmige Kontur und weist daher mittig eine Senke 16 auf. Im Bereich der Senke 16 liegt das Schlauchelement 5 unmittelbar an einem Dichtelement 7 an, das über eine Innenkontur 8 aus einem weichelastischen Werkstoff verfügt. Die Innenkontur 8 bildet dabei den mittleren Abschnitt des Dichtelementes 7, der mit seinem Öffnungsbereich eine Fortsetzung der in dem Unterwerkzeug 3 vorhandenen Mulde 11 zur Einlage des Kabelbaumes 1 bildet. Seitlich der Innenkontur 8 des Dichtelementes 7 ist dieses aus einem Werkstoff hergestellt, der eine vergleichsweise höhere Festigkeit aufweist, als der weichelastische Abschnitt. In diesem Bereich sind bei dem in Figur 2 dargestellten Beispiel Bohrungen 10 in das Dichtelement 7 eingebracht, die dazu dienen, das Dichtelement 7 mit dem Unterwerkzeug 3 zu verschrauben, wodurch eine Fixierungseinrichtung gebildet wird. Hierbei werden geeignete Schrauben durch die Bohrungen 10 hindurch geführt und in ein korrespondierendes Gewinde in dem Unterwerkzeug 3 eingeschraubt.

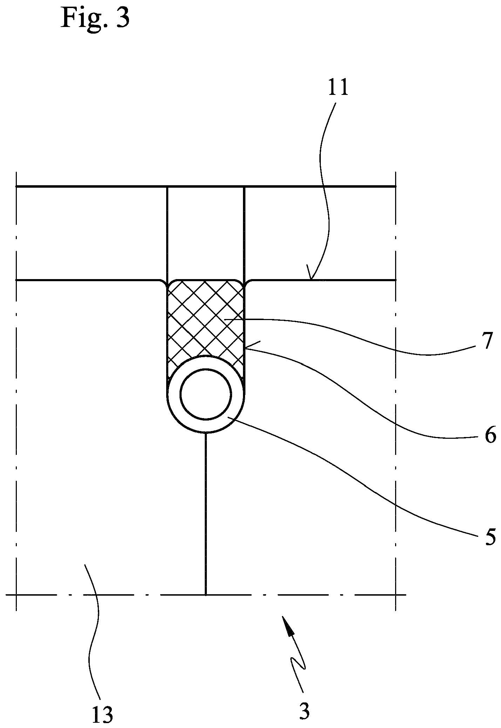

Den Schnittverlauf III-III aus Figur 2 veranschaulicht die Figur 3. Hieraus wird ersichtlich, dass das Dichtelement 7 innerhalb einer Aufnahmekontur 6 des Unterwerkzeugs 3 geführt aufgenommen ist. Unterhalb des Dichtelementes befindet sich das Schlauchelement 5, dessen Innenraum pneumatisch mit einem Druck beaufschlagt wird, so dass sich in Folge dessen das Schlauchelement 5 in seinem Volumen erweitert. Dies hat zur Folge, dass sich das Dichtelement 7 innerhalb der Aufnahmekontur 6 in Richtung auf die Mulde 11 und den darin eingelegten Kabelbaum 1 zu bewegt. Durch diese Bewegung schmiegt sich der weichelastische Abschnitt des Dichtelementes 7 an die Kontur des Kabelbaumes 1 an und dichtet damit die Kavität 4 gegenüber der Umgebung ab. Im linken Bildteil der Figur 3 ist ein Teil eines Absperrschiebers 13 dargestellt, der das Dichtelement 7 und das Schlauchelement 5 an dem Unterwerkzeug 3 fixiert.

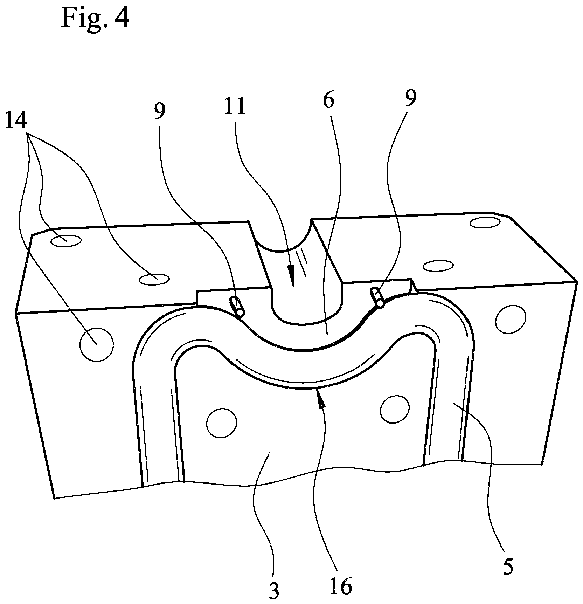

Aus der Figur 4 geht eine der Figur 2 ähnliche Darstellung des Unterwerkzeugs 3, jedoch ohne dass Dichtelement 7, hervor. Die Figur 4 zeigt deutlich, dass die Aufnahmekontur 6 der Geometrie des Dichtelementes 7 entspricht und in die Oberfläche des Unterwerkzeugs 3 eingearbeitet ist. Analog ist natürlich auch die Gestaltung des in der Figur 4 nicht gezeigten Oberwerkzeuges ausgeführt. Die Aufnahmekontur 6 verfügt im Unterschied zur Ausführung in Figur 2 hierbei erfindungsgemäß über zwei Stifte 9, die im Randbereich, etwa seitlich der Senke 16 des Schlauchelementes 5, angeordnet sind und aus der Aufnahmekontur 6 herausragen. Das hierzu korrespondierende Dichtelement 7 verfügt im Bereich der Stifte 9 über Bohrungen und kann folglich auf die Stifte 9 aufgesetzt werden. Dies hat zur Folge, dass die Stifte 9 bei Verformung des Dichtelementes 7 gelenkartig eine Bewegung des Dichtelementes 7 ermöglichen, so dass sich die weichelastisch ausgeführte Innenkontur 8 des Dichtelementes 7 optimal an den in der Mulde 11 eingelegten Kabelbaum 1 anlegen und diesen somit gegenüber der Umgebung abdichten kann.

### BEZUGSZEICHENLISTE:

- 1: Kabelbaum
- 2: Halteelement
- 3: Unterwerkzeug
- 4: Kavität
- 5: Schlauchelement
- 6: Aufnahmekontur
- 7: Dichtelement
- 8: Innenkontur
- 9: Stift
- 10: Bohrung
- 11: Mulde
- 12: Angusskanal
- 13: Absperrschieber
- 14: Justierungsbohrung
- 15: Druckluftanschluss
- 16: Senke

## Patentansprüche

1. Gießvorrichtung zur Herstellung einer Verbindung zwischen einem aus einer Vielzahl einzelner Kabel bestehenden Kabelbaum (1) mit einem diesen integrierenden Halteelement (2), umfassend:
- ein Unterwerkzeug (3),
- ein das Unterwerkzeug (3) verschließendes Oberwerkzeug,
- mindestens eine, bei geschlossener Gießvorrichtung zwischen Oberwerkzeug und Unterwerkzeug (3) gebildete, den Kabelbaum (1) aufnehmende Kavität (4) mit der Negativform des zu erzeugenden Halteelementes (2),
- wenigstens ein hydraulisch oder pneumatisch in seinem Volumen vergrößerbares Schlauchelement (5), das mit einem separaten, zumindest abschnittsweise bewegbar in einer Aufnahmekontur (6) der Gießvorrichtung eingesetzten und den Kabelbaum (1) bei expandiertem Schlauchelement (5) gegenüber der Umgebung abdichtenden, zumindest im Bereich einer den Kabelbaum (1) aufnehmenden Innenkontur (8) weichelastisch ausgeführten Dichtelement (7) gekoppelt ist,
**dadurch gekennzeichnet, dass**
das Dichtelement (7) über mindestens eine Fixierungseinrichtung lokal in der Aufnahmekontur (6) der Gießvorrichtung befestigt ist, wobei die Fixierungseinrichtung aus zwei Stiften (9) besteht, die passend in korrespondierende Bohrungen (10) eingesetzt sind, sodass bei Verformung des Dichtelementes (7) durch die Stifte eine gelenkartige Bewegung des Dichtelementes (7) ermöglicht ist.

2. Gießvorrichtung nach Anspruch 1,
**dadurch gekennzeichnet, dass**
das Dichtelement (7) insgesamt aus einem weichelastischen Werkstoff besteht.

3. Gießvorrichtung nach einem der vorstehend genannten Ansprüche,
**dadurch gekennzeichnet, dass**
das Dichtelement (7) zweiteilig ausgeführt ist und eine der Hälften des Dichtelements (7) in dem Oberwerkzeug und die korrespondierende, zweite Hälfte des Dichtelements (7) in dem Unterwerkzeug (3) aufgenommen ist.

4. Gießvorrichtung nach Anspruch 3,
**dadurch gekennzeichnet, dass**
jeder Hälfte des Dichtelements (7) je ein Schlauchelement (5) zugeordnet ist.

5. Gießvorrichtung nach einem der vorstehend genannten Ansprüche,
**dadurch gekennzeichnet, dass**
das Dichtelement (7) aus Silikon besteht.

6. Gießvorrichtung nach einem der vorstehend genannten Ansprüche,
**dadurch gekennzeichnet, dass**
das Halteelement (2) aus Naturkautschuk, Polyurethan (PUR) oder Ethylenpropylendienkautschuk (EPDM) hergestellt ist.

7. Verfahren zur Ausstattung eines aus einer Vielzahl einzelner Kabel bestehenden Kabelbaumes (1) mit einem diesen integrierenden Halteelement (2), umfassend die Verfahrensschritte:
- Einlage des Kabelbaumes (1) in eine passende Kavität (4) einer ein Oberwerkzeug und ein Unterwerkzeug (3) aufweisenden Gießvorrichtung,
- Verschließen der Gießvorrichtung,
- Beaufschlagung eines Schlauchelementes (5) der Gießvorrichtung mit einem hydraulisch oder pneumatisch erzeugten Druck, sodass das auf diese Weise in seinem Volumen erweiterte Schlauchelement (5) mit einem mit dem Schlauchelement (5) zusammenwirkenden Dichtelement (7) dichtend an dem Kabelbaum (1) anliegt und den Kabelbaum (1) gegenüber der Umgebung abdichtet, wobei das Dichtelement (7) bei seiner Verformung eine gelenkartige Bewegung um zwei in passende Bohrungen (10) eingesetzte Stifte (9) einer lokal in einer Aufnahmekontur (6) der Gießvorrichtung befestigten Fixierungseinrichtung vollzieht, so dass sich die weichelastisch ausgeführte Innenkontur (8) des Dichtelementes (7) an den Kabelbaum (1) anlegt und diesen somit gegenüber der Umgebung abdichtet,
- Einbringung eines Gießwerkstoffes in die Gießvorrichtung,
- Druckentlastung des Schlauchelementes (5), sodass das Dichtelement (7) den mit dem Halteelement (2) ausgestatteten Kabelbaum (1) zur Entnahme aus der geöffneten Gießvorrichtung freigibt.

## Claims

1. Casting device for establishing a connection between a cable tree (1) consisting of a plurality of individual cables with a retaining element (2) integrated therein, comprising:
- a lower tool (3),
- an upper tool sealing the lower tool (3),
- at least one cavity (4) formed between upper tool and lower tool (3) when the casting device is closed and receiving the cable tree (1) with the negative form of the retaining element (2) to be generated,
- at least one hose element (5) hydraulically or pneumatically enlargeable in its volume which is coupled to a separate seal element (7) inserted in a receiving contour (6) of the casting device so as to be movable at least in sections, sealing off the cable tree (1) from the environment when the hose element (5) is expanded and flexibly configured at least in the region of an inner contour (8) receiving the cable tree (1), **characterised in that** the seal element (7) is fastened via at least one fixing mechanism locally in the receiving contour (6) of the casting device, wherein the fixing mechanism consists of two pins (9), which are inserted appropriately into corresponding boreholes (10) so that an articulated movement of the seal element (7) is enabled when the seal element (7) is deformed by the pins.

2. Casting device according to claim 1, **characterised in that** the seal element (7) consists overall of a flexible material.

3. Casting device according to any one of the preceding claims, **characterised in that** the seal element (7) is configured in two parts and one of the halves of the seal element (7) is received in the upper tool and the corresponding second half of the seal element (7) is received in the lower tool (3).

4. Casting device according to claim 3, **characterised in that** a hose element (5) is in each case assigned to each half of the seal element (7).

5. Casting device according to any one of the preceding claims, **characterised in that** the seal element (7) consists of silicone.

6. Casting device according to any one of the preceding claims, **characterised in that** the retaining element (2) is produced from natural rubber, polyurethane (PUR) or ethylene propylene diene monomer (EPDM).

7. Method for equipping a cable tree (1) consisting of a plurality of individual cables with a retaining element (2) integrated therein, comprising the method steps:
- inserting the cable tree (1) into an appropriate cavity (4) of a casting device comprising an upper tool and a lower tool (3),
- sealing the casting device,
- applying a hydraulically or pneumatically generated pressure to a hose element (5) of the casting device such that the hose element (5) expanded in this way in its volume, with a seal element (7) cooperating with the hose element (5), abuts in a sealing manner on the cable tree (1) and seals off the cable tree (1) with respect to the environment, wherein the seal element (7), when it is deformed, performs an articulated movement around two pins (9), inserted into appropriate boreholes (10), of a fixing mechanism fastened in a receiving contour (6) of the casting device such that the flexibly configured inner contour (8) of the seal element (7) rests on the cable tree (1) and therefore seals it off from the environment,
- introducing a casting tool into the casting device,
- relieving pressure on the hose element (5) such that the seal element (7) releases the cable tree (1) equipped with the retaining element (2) for removal from the opened casting device.

## Revendications

1. Dispositif de moulage pour l'établissement d'une liaison entre un faisceau dé câbles (1) constitué d'une pluralité de câbles différents avec un élément de maintien (2) intégrant celui-ci, comprenant :
- un outil inférieur (3),
- un outil supérieur fermant l'outil inférieur (3)
- au moins une cavité (4), formée, lorsque le dispositif de moulage est fermé, entre l'outil supérieur et l'outil inférieur (3), logeant le faisceau de câbles (1), avec la forme négative de l'élément de maintien (2) à obtenir,
- au moins un élément de tuyau (5) avec un volume dilatable de manière hydraulique ou pneumatique, qui est couplé avec un élément d'étanchéité (7) élastique souple inséré de manière mobile au moins à certains endroits dans un contour de logement (6) du dispositif de moulage et étanchéifiant le faisceau de câbles (1) par rapport à l'environnement lorsque l'élément de tuyau (5) est dilaté, au moins au niveau d'un contour interne (8) logeant le faisceau de câbles (1),
**caractérisé en ce que**
l'élément d'étanchéité (7) est fixé localement par l'intermédiaire d'au moins un dispositif de fixation dans le contour de logement (6) du dispositif de moulage, dans lequel le dispositif de fixation est constitué de deux goupilles (9) qui sont insérées de manière ajustée dans des alésages (10) correspondants, de façon à ce que, lors d'une déformation de l'élément d'étanchéité (7), un mouvement articulé de l'élément d'étanchéité (7) soit permis par les goupilles.

2. Dispositif de moulage selon la revendication 1,
**caractérisé en ce que**
l'élément d'étanchéité (7) est constitué globalement d'un matériau élastique souple.

3. Dispositif de moulage selon l'une des revendications précédentes,
**caractérisé en ce que**
l'élément d'étanchéité (7) est réalisé en deux parties et une des moitiés de l'élément d'étanchéité (7) est logée dans l'outil supérieur et la deuxième moitié correspondante de l'élément d'étanchéité (7) est logée dans l'outil inférieur (3).

4. Dispositif de moulage selon la revendication 3,
**caractérisé en ce que**
à chaque moitié de l'élément d'étanchéité (7) correspond un élément de tuyau (5).

5. Dispositif de moulage selon l'une des revendications précédentes,
**caractérisé en ce que**
l'élément d'étanchéité (7) est constitué de silicone.

6. Dispositif de moulage selon l'une des revendications précédentes,
**caractérisé en ce que**
l'élément de maintien (2) est constitué de caoutchouc naturel, de polyuréthane (PUR) ou d'un caoutchouc éthylène-popylène-diène (EPDM).

7. Procédé pour l'équipement d'un faisceau de câbles (1) constitué d'une pluralité de câbles différents avec un élément de maintien (2) intégrant celui-ci, comprenant les étapes suivantes :
- insertion du faisceau de câbles (1) dans une cavité (4) appropriée d'un dispositif de moulage comprenant un outil supérieur et un outil inférieur (3),
- fermeture du dispositif de moulage,
- alimentation d'un élément de tuyau (5) du dispositif de moulage avec une pression générée de manière hydraulique ou pneumatique, de façon à ce que l'élément de tuyau (5), avec son volume ainsi agrandi, soit placé de façon étanche sur le faisceau de câble (1) avec un élément d'étanchéité (7) interagissant avec l'élément de tuyau (5) et assure l'étanchéité du faisceau de câble (1) vis-à-vis de l'environnement, l'élément d'étanchéité (7) effectuant lors de sa déformation un mouvement articulé autour de deux goupilles (9) insérées dans des alésages (10) appropriés d'un dispositif de fixation fixé localement dans un contour de logement (6) du dispositif de moulage, de façon à ce que le contour interne (8) élastique souple de l'élément d'étanchéité (7) s'appuie contre le faisceau de câbles (1) et étanchéifie ainsi celui-ci par rapport à l'environnement,
- introduction d'un matériau de moulage dans le dispositif de moulage,
- décharge de pression de l'élément de tuyau (5), de façon à ce que l'élément d'étanchéité (7) libère le faisceau de câbles (1) équipé de l'élément de maintien (2) pour le retrait hors du dispositif de moulage ouvert.
